# EUROPÄISCHE PATENTSCHRIFT

(11) **EP 1 078 175 B1**
(45) Veröffentlichungstag und Bekanntmachung des Hinweises auf die Patenterteilung: **19.02.2003**
(21) Anmeldenummer: 99953371.4
(22) Anmeldetag: 21.05.1999
(51) Int. Cl.: F16D 66/02

(54) **ELEKTRISCHE WARNEINRICHTUNG ZUR REIBBELAGVERSCHLEISSANZEIGE SOWIE DAMIT AUSGERÜSTETE BREMSBELAG-BAUGRUPPE UND SCHEIBENBREMSE**
ELECTRIC WARNING DEVICE FOR BRAKE PAD WEAR INDICATION, BRAKE PAD MODULE FITTED WITH SAME AND DISK BRAKE
SYSTEME AVERTISSEUR ELECTRIQUE INDIQUANT L'USURE DE GARNITURES DE FRICTION ET ENSEMBLE GARNITURE DE FREIN ET DISQUE DE FREIN AINSI EQUIPES

(30) Priorität: 22.05.1998 DE 19823022
(43) Veröffentlichungstag der Anmeldung: 28.02.2001
(73) Patentinhaber: LUCAS INDUSTRIES PUBLIC LIMITED COMPANY, Solihull B90 4LA (GB)
(72) Erfinder: ZENZEN, Guido, D-56290 Macken (DE)
(74) Vertreter: Beyer, Andreas, Dr.
(86) Internationale Anmeldenummer: EP9903526
(87) Internationale Veröffentlichungsnummer: WO99061813

(56) Entgegenhaltungen:
- EP-A- 0 634 586
- DE-A- 3 307 394
- DE-A- 4 237 679
- FR-A- 2 617 257

## Beschreibung

Die Erfindung betrifft eine elektrische Warneinrichtung gemäß dem Oberbegriff des Patentanspruchs 1, eine damit ausgestattete Bremsbelag-Baugruppe und eine mit einer solchen Bremsbelag-Baugruppe ausgerüstete Scheibenbremse.

Eine elektrische Warneinrichtung mit den Merkmalen des Oberbegriffs des Patentanspruchs 1 ist aus dem deutschen Patent 33 07 394 (DE 33 07 394 C2) bekannt. Die elektrische Warneinrichtung zur Anzeige abgenutzter Reibbeläge besteht im wesentlichen aus einem Stopfen mit einem Kopf und einem Schaft, der eine Längsnut zur Aufnahme eines elektrischen Leiters aufweist. Der elektrische Leiter ist üblicherweise in einer U-förmigen Schleife in diese Längsnut des Stopfens eingelegt und wird mittels des Stopfens am Bremsbelag befestigt. Hierzu weist der Bremsbelag eine sich meist radial erstreckende Bohrung im Reibbelagmaterial auf, in die der Stopfen eingesetzt und darin durch eine Klemm- oder Spreizwirkung oder auch durch Ausgießen mit einem Klebstoff (Kunstharz oder ähnliches) festgehalten wird.

Der elektrische Leiter selbst ist im allgemeinen eine Litze mit einem Isoliermantel. Der Leiter wird an einen elektrischen Stromkreis angeschlossen, der sich schließt, wenn bei fortgeschrittenem Reibbelagverschleiß die Bremsscheibe den Stopfen und den Isoliermantel des Leiters durchgeschliffen hat und den Leiter berührt. Wenn der Leiter schleifenförmig gestaltet ist, kann er Bestandteil eines sogenannten Ruhestromkreises sein, der unterbrochen wird, wenn der Leiter bei weiter fortschreitendem Reibbelagverschleiß vollständig durchtrennt wird.

Bei der aus der DE 33 07 394 C2 bekannten Bremsbelag-Baugruppe wird der elektrische Leiter, bevor er den Kopf des Stopfens erreicht, durch einen Hohlniet geführt, der zur schwenkbaren Lagerung einer Bremsbelag-Niederhaltefeder an einem Vorsprung der Trägerplatte des Bremsbelags dient. Die Niederhaltefeder stützt sich an der Brücke eines Schwimmsattels einer Schwimmsattel-Scheibenbremse ab. Durch diese Anordnung ist sichergestellt, daß der elektrische Leiter nicht zwischen der Niederhaltefeder und der Trägerplatte des Bremsbelags eingeklemmt wird. Jedoch erfordert eine solche Bauweise einen radialen Freiraum von etwa 10 mm zwischen dem radial äußeren Rand des Bremsbelags und der Felge des Fahrzeugrades, mit dem die Bremse zusammenwirkt.

Bei Hochleistungsscheibenbremsen soll die Bremsscheibe einen möglichst großen Durchmesser aufweisen, damit ein für schnelle und schwere Fahrzeuge ausreichend großes Bremsmoment erzielt werden kann und damit des weiteren die Flächenbelastung des sogenannten Bremsscheibenpfades vermindert und zugleich eine größere, Wärme abstrahlende Oberfläche erhalten wird. Der Bremsscheibenpfad ist diejenige Kreisringfläche, auf der die Reibbeläge sich beim Bremsen an der Bremsscheibe abstützen. Häufig soll der Bremsscheibendurchmesser vergrößert werden, ohne daß der Durchmesser der Radfelge vergrößert wird. Dies kann nur erreicht werden, wenn der Freiraum zwischen der Radfelge und der Bremsscheibe soweit wie konstruktiv möglich ausgenutzt wird. Je kleiner der noch verbleibende Freiraum zwischen der Radfelge und der Bremsscheibe ist, desto größer ist die Gefahr einer Beschädigung des elektrischen Leiters durch beispielsweise Einquetschen zwischen zwei Bauteilen.

Der Erfindung liegt die Aufgabe zugrunde, eine elektrische Warneinrichtung zur Anzeige von übermäßigem Reibbelagverschleiß und eine damit ausgestattete Bremsbelag-Baugruppe anzugeben, die einen geringeren radialen Bauraum als bisher üblich benötigt und die dennoch eine Beschädigung des elektrischen Leiters sicher vermeidet. Insbesondere soll vermieden sein, daß der elektrische Leiter zwischen der Trägerplatte des Bremsbelags und einer Niederhaltefeder eingeklemmt wird.

Diese Aufgabe ist erfindungsgemäß mit einer elektrischen Warneinrichtung gelöst, die die im Patentanspruch 1 angegebenen Merkmale aufweist. Demnach erstreckt sich der am Stopfen vorhandene Fortsatz vom Schutzschild über die gemeinsame Mittelebene des Stopfenschaftes und der Längsnut, in der der Leiter aufgenommen ist, bis etwa mindestens zum gegenüberliegenden Stopfenschaftrand, so daß der elektrische Leiter durch den Fortsatz in eine um etwa 90 Grad umgelenkte Richtung gezwungen wird. Erfindungsgemäß wird somit der elektrische Leiter der elektrischen Warneinrichtung in einer nur wenig radialen Bauraum beanspruchenden Weise und darüber hinaus gut geschützt weggeführt. Der den elektrischen Leiter im Reibbelag befestigende Stopfen kann am Bremsbelag radial innen oder radial außen vorgesehen sein.

Gemäß einer vorteilhaften Weiterbildung der erfindungsgemäßen elektrischen Warneinrichtung erstreckt sich der genannte Fortsatz nicht nur bis etwa mindestens zum gegenüberliegenden Stopfenschaftrand, sondern sogar über den Rand des Kopfes des Stopfenschaftes hinaus. Dadurch wird eine noch sicherere Führung des elektrischen Leiters in der gewünschten Richtung erreicht.

Bei manchen Ausführungsformen der erfindungsgemäßen elektrischen Warneinrichtung ist der sich von dem Schutzschild erstreckende Fortsatz federnd nachgiebig ausgeführt, derart, daß er eine in Richtung zum Stopfenschaft hin auf den elektrischen Leiter wirkende Kraft ausüben kann. Damit wird erreicht, daß der Leiter im Bereich der Warneinrichtung auch dann möglichst flach weggeführt wird, wenn im weiteren Verlauf des Leiters Kräfte auf diesen wirken, die ihn in eine andere Richtung ziehen wollen. Bei anderen Ausführungsformen ist der Fortsatz so starr und stabil, daß er seine vorgegebene Orientierung auch bei auf ihn wirkenden Kräften ausreichend beibehält.

Die Erfindung betrifft auch eine Bremsbelag-Baugruppe, die mit einer wie zuvor beschriebenen elektrischen Warneinrichtung ausgestattet ist. Bei der erfindungsgemäßen Bremsbelag-Baugruppe ist die Trägerplatte des Bremsbelags in einem radial gelegenen, reibbelagfreien Bereich mit einer zum radialen Rand der Trägerplatte offenen Aussparung versehen, durch die der elektrische Leiter geführt ist. Der Fortsatz der erfindungsgemäßen Warneinrichtung zwingt den Leiter in diese Aussparung der Trägerplatte. Die Aussparung der Bremsbelagträgerplatte und die Bohrung im Reibbelagmaterial, in der der Stopfen der Warneinrichtung befestigt ist, weisen Mittelebenen auf, die einander benachbart sind, um eine möglichst schnelle Herausführung des Leiters aus dem am meisten temperaturbelasteten Bereich nahe der Bremsscheibe zu erreichen. Vorzugsweise haben die Aussparung der Bremsbelagträgerplatte und die Bohrung im Reibbelagmaterial eine gemeinsame Mittelebene.

Bei Ausführungsformen der erfindungsgemäßen Bremsbelag-Baugruppe mit federndem Fortsatz übt letzterer eine den elektrischen Leiter in die Aussparung zurückdrückende Kraft dann aus, wenn der elektrische Leiter aus irgendwelchen Gründen dazu neigt, die Aussparung der Trägerplatte zu verlassen.

Gemäß einer vorteilhaften Weiterbildung der erfindungsgemäßen Bremsbelag-Baugruppe erstreckt sich der Fortsatz der Warneinrichtung bis in die Aussparung der Trägerplatte hinein. Der elektrische Leiter wird dadurch noch zuverlässiger in der Aussparung der Trägerplatte gehalten und die Gefahr eines Einklemmens des Leiters zwischen dem Rand der Bremsbelagträgerplatte und einer Niederhaltefeder ist weiter verringert.

Die vorliegende Erfindung betrifft auch eine Scheibenbremse, insbesondere eine Fahrzeugscheibenbremse, die mit einer erfindungsgemäßen Bremsbelag-Baugruppe ausgestattet ist. Eine solche Scheibenbremse, beispielsweise eine Schwimmrahmen-Scheibenbremse, kann den zwischen ihr und einer Radfelge bestehenden Freiraum maximal ausnutzen.

In einer bevorzugten Ausführungsform dieser Scheibenbremse verschließt ein Federarm einer auf die Bremsbelag-Baugruppe einwirkenden Niederhaltefeder den radial offenen Rand der Aussparung der Bremsbelagträgerplatte, durch die der elektrische Leiter geführt ist. Auf diese Weise wird die elektrische Warneinrichtung mit ihrem Leiter auch dann noch im Reibbelag gehalten, wenn sich beispielsweise durch übergroße Hitze der Klebstoff zersetzt hat, der den Stopfen in der Bohrung des Reibbelags festhalten soll.

Mehrere bevorzugte Ausführungsbeispiele einer erfindungsgemäßen Warneinrichtung werden im folgenden anhand der beigefügten, teilweise schematischen Zeichnungen näher erläutert. Es zeigt:
- Fig. 1: eine Draufsicht auf eine Schwimmrahmen-Scheibenbremse mit einer erfindungsgemäßen Bremsbelag-Baugruppe gemäß einer ersten Ausführungsform,
- Fig. 2: die Ansicht II-II aus Fig. 1,
- Fig. 3: den Schnitt III-III aus Fig. 2,
- Fig. 4A: einen Stopfen der erfindungsgemäßen elektrischen Warneinrichtung zur Reibbelagverschleißanzeige in Vorderansicht und teilweise im Schnitt,
- Fig. 4B: den Stopfen aus Fig. 4A in Seitenansicht,
- Fig. 4C: den Schnitt A-A aus Fig. 4B,
- Fig. 4D: die Draufsicht des Stopfens aus Fig. 4A,
- Fig. 5: eine anschlußfertige Bremsbelag-Baugruppe gemäß der Erfindung,
- Fig. 6: ein etwas abgewandeltes Ausführungsbeispiel einer Bremsbelag-Baugruppe mit einer erfindungsgemäßen Warneinrichtung, eingebaut in eine andere Fahrzeugscheibenbremse, und
- Fig. 7: ein nochmals abgewandeltes Ausführungsbeispiel einer Bremsbelag-Baugruppe mit einer erfindungsgemäßen Warneinrichtung, eingebaut in eine noch anders ausgebildete Fahrzeugscheibenbremse.

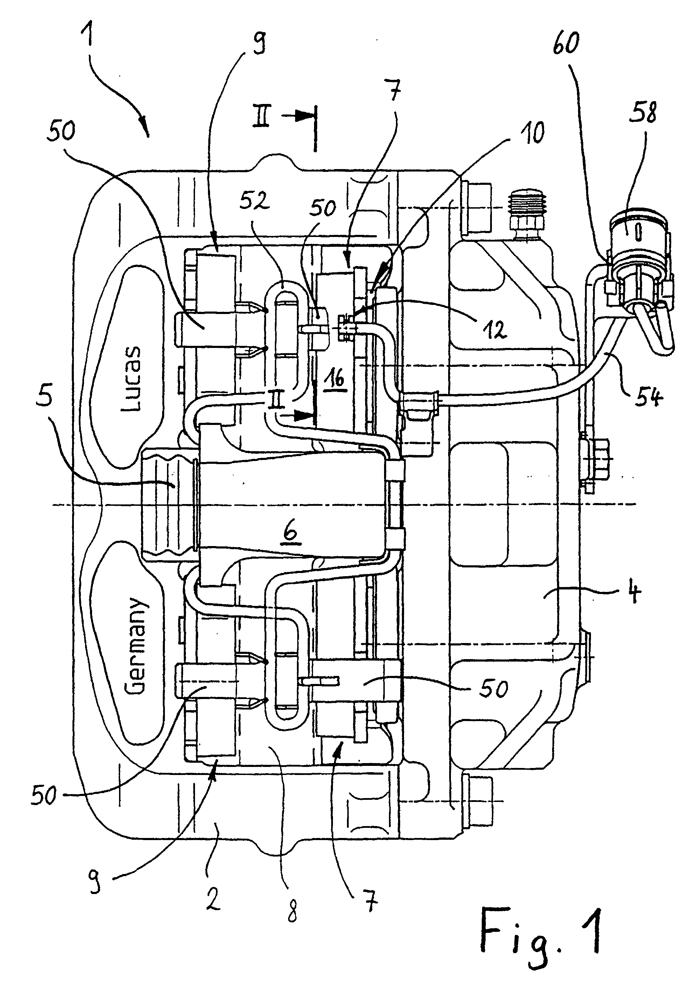

Fig. 1 zeigt eine hydraulisch zu betätigende Schwimmrahmen-Scheibenbremse 1 für ein Kraftfahrzeug.

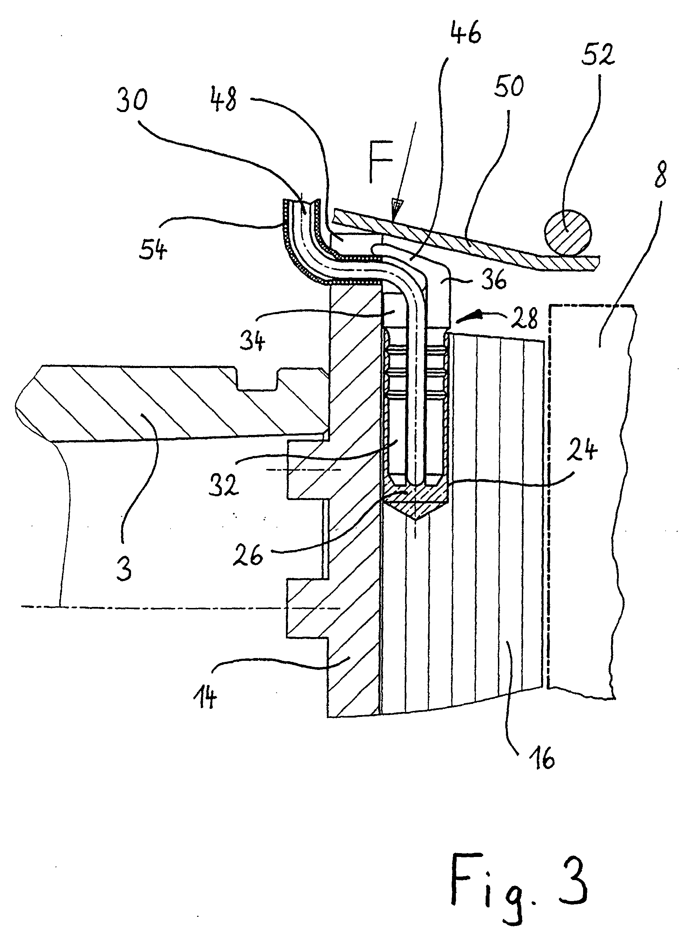

Die Scheibenbremse 1 hat einen Schwimmrahmen 2, der mit einem zwei hydraulische Betätigungskolben 3 (sh. Fig. 3) aufnehmenden Gehäuse 4 verbunden und über abgedichtete Führungsbolzen 5 gleitend verschiebbar auf einem Bremsträger 6 geführt ist.

Mittels der hydraulischen Betätigungskolben 3 können innere Bremsbeläge 7 gegen eine Bremsscheibe 8 gepreßt werden. Sobald diese Bremsbeläge 7 an der Bremsscheibe 8 anliegen, wirken die hydraulischen Betätigungskräfte über den Schwimmrahmen 2 auch auf äußere Bremsbeläge 9, so daß letztere ebenfalls gegen die Bremsscheibe 8 gepreßt werden und zusammen mit den inneren Bremsbelägen 7 ein hier nicht dargestelltes Fahrzeugrad abbremsen. Der Aufbau und die grundsätzliche Funktion einer solchen Scheibenbremse ist Fachleuten auf diesem Gebiet gut bekannt und braucht daher nicht weiter erläutert zu werden. Verwiesen wird in diesem Zusammenhang beispielsweise auf die europäische Patentschrift EP 0 412 541.

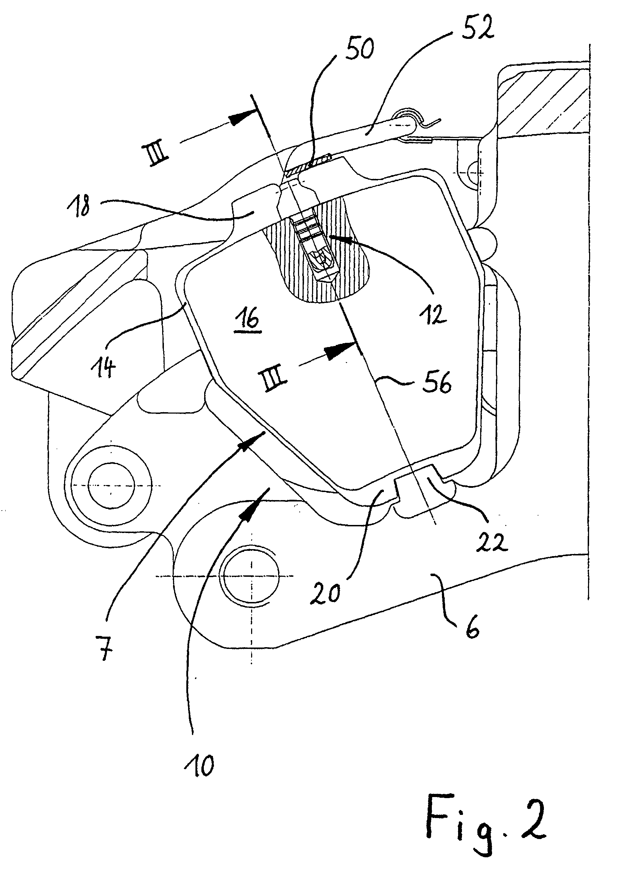

Die in Fig. 1 dargestellte Scheibenbremse 1 weist eine allgemein mit 10 bezeichnete Bremsbelag-Baugruppe auf, die mit einer elektrischen Warneinrichtung 12 zur Anzeige abgenutzter Reibbeläge versehen ist. Diese Bremsbelag-Baugruppe 10 wird nun unter Bezug auf insbesondere die Figuren 2 bis 4 näher erläutert.

Fig. 2 zeigt hierzu eine teilweise aufgebrochene Seitenansicht des einen Bremsbelags 7 aus Fig. 1. Wie alle anderen Bremsbeläge 7 und 9 weist der dargestellte Bremsbelag 7 eine hier aus Stahl gefertigte Trägerplatte 14 auf, an der ein Reibbelag 16 befestigt ist, beispielsweise durch Kleben. Ein radial außen gelegener Bereich 18 der Trägerplatte 14 ist nicht von dem Reibbelag 16 bedeckt. Mit der Rückseite liegt die Trägerplatte 14 am zugehörigen Betätigungskolben 3 an (sh. Fig. 3), während ein radial innen an ihr ausgebildeter Führungsvorsprung 20 im Zusammenwirken mit einer am Bremsträger 6 ausgebildeten Führung 22 für eine ordnungsgemäße Führung des Bremsbelags 7 sorgt.

Angrenzend an die Vorderseite der Trägerplatte 14 ist in einer radial verlaufenden Bohrung 24 des Reibbelages 16 die Warneinrichtung 12 befestigt, beispielsweise durch Verkleben mit einem Kunstharz 26 (sh. Fig. 3). Zur Warneinrichtung 12 gehört ein hier aus Kunststoff bestehender Stopfen 28 und ein daran befestigter, elektrischer Leiter 30 in Form einer isolierten Drahtlitze.

Der Stopfen 28 hat einen im wesentlichen zylindrischen Schaft 32, einen quaderförmigen Kopf 34 und ein von diesem nach oben ragendes Schutzschild 36. Der Schaft 32, der in der Bohrung 24 steckt, ist auf zwei gegenüberliegenden Seiten mit einer Längsnut 38 versehen, die zu einer Mittelebene 40 des Schaftes 32 symmetrisch ist und sich um das in der Bohrung 24 befindliche, untere Ende des Schaftes 32 herum erstreckt.

Der Kopf 34 weist zwei Schlitze 42 auf, die von zwei einander gegenüberliegenden Seiten eingearbeitet sind und mit der Längsnut 38 fluchten. Der Leiter 30 ist in der Mittelebene 40 U-förmig um den Schaft 32 herumgeführt und in dessen Längsnut 38 sowie in die Schlitze 42 des Kopfes 34 eingelegt.

Am Schaft 32 sind mehrere Rippen 44 ausgebildet, die um den Schaft 32 herum einen Freiraum für das Kunstharz 26 sicherstellen und zugleich für eine noch bessere Verankerung des Schaftes 32 im ausgehärteten Kunstharz 26 sorgen.

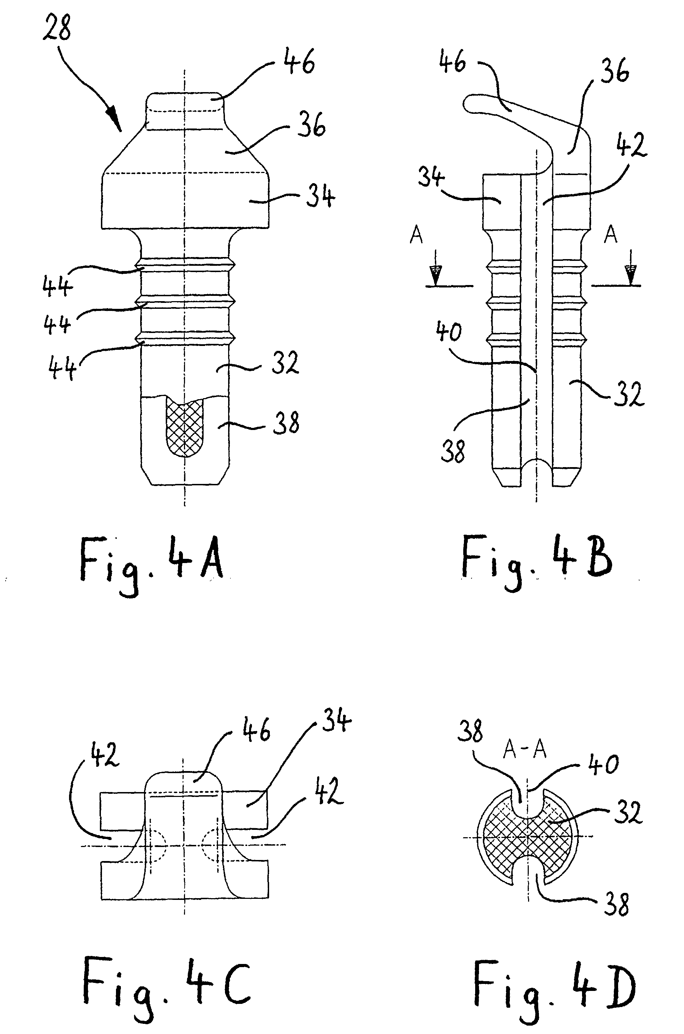

Wie insbesondere aus den Figuren 3 und 4B gut zu erkennen, ist das Schutzschild 36, das den elektrischen Leiter 30 vor mechanischer Beschädigung und auch vor von der Bremsscheibe 8 abgestrahlter wärme schützt, bezüglich der Längsnut 38 seitlich versetzt angeordnet. Von dem Schutzschild 36 erstreckt sich ein einstückig mit dem Schutzschild 36 ausgebildeter Fortsatz 46 leicht schräg nach oben geneigt über die Mittelebene 40 hinaus in Richtung der Trägerplatte 14 bis in eine in der Trägerplatte 14 vorhandene und zu ihrem radialen Außenrand offene Aussparung 48. Mittels dieses Fortsatzes 46 wird der in der Längsnut 38 des Stopfens aufgenommene elektrische Leiter 30 zwangsweise umgelenkt und in die Aussparung 48 sowie durch sie hindurchgeführt. Auf diese Weise besteht keine Gefahr, daß ein den Bremsbelag 7 auf seine Führung 22 drückender Federarm 50 einer Niederhaltefeder 52 (sh. auch Fig. 1) den elektrischen Leiter 30 zwischen sich und der Trägerplatte 14 einklemmt und dadurch möglicherweise beschädigt. Als zusätzlicher Schutz ist der elektrische Leiter 30 mit einer Ummantelung 54 versehen, die bis in die Aussparung 48 reicht.

Wie aus den Figuren 2 und 3 zu erkennen, haben die Bohrung 24 und die Aussparung 48 im gezeigten Ausführungsbeispiel eine gemeinsame Mittelebene 56. Dadurch ist der elektrische Leiter 30 auf dem kürzesten Wege aus der bremsscheibennahen und daher heißen Zone herausgeführt. Der Federarm 50 der Niederhaltefeder 52 verschließt die Aussparung 48 radial nach außen, so daß sich die Warneinrichtung 12 auch dann nicht aus dem Bremsbelag 7 entfernen kann, wenn das Kunstharz 26 seine haltende Funktion nicht mehr erfüllt, beispielsweise weil es sich aufgrund zu hoher Temperaturen zersetzt hat.

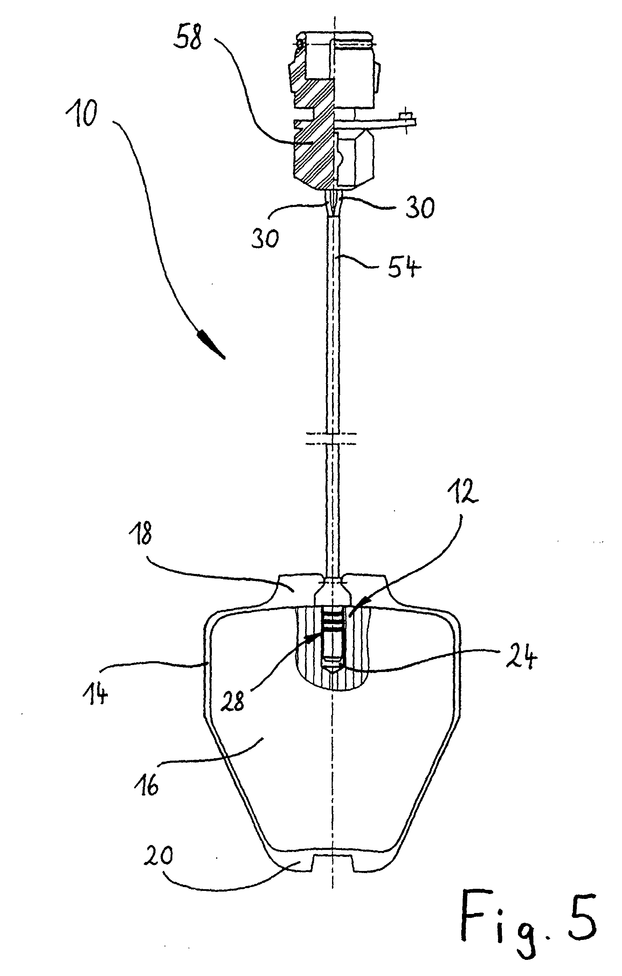

Fig. 5 zeigt die Bremsbelag-Baugruppe 10 im anschlußfertigen Zustand mit einem Anschlußstecker 58. Der Anschlußstecker 58 wird an der Scheibenbremse 1 in einer Klemmhalterung 60 (sh. Fig. 1) befestigt.

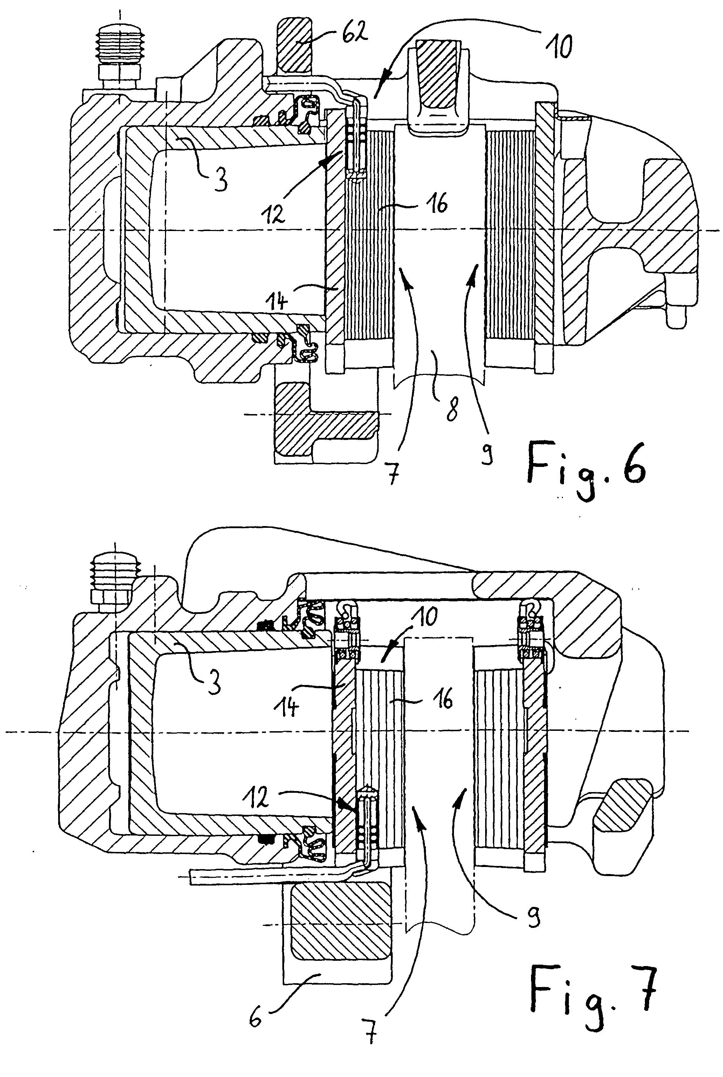

Fig. 6 zeigt eine etwas abgewandelte, der bisher beschriebenen Ausführungsform jedoch sehr ähnliche Ausgestaltung einer Bremsbelag-Baugruppe 10. Im Unterschied zum zuvor beschriebenen Ausführungsbeispiel weist der in Fig. 6 dargestellte Bremsbelag 7 keine Aussparung 48 auf. Statt dessen wird der elektrische Leiter 30 unterhalb einer zum Bremsträger 6 gehörenden Brücke 62 durchgeführt.

Fig. 7 zeigt ein nochmals abgewandeltes Ausführungsbeispiel einer Bremsbelag-Baugruppe 10, bei der im Unterschied zu den vorhergehenden zwei Ausführungsbeispielen die Warneinrichtung 12 am radial inneren Rand des Bremsbelags 7 angeordnet ist. Der elektrische Leiter 30 ist zwischen der Trägerplatte 14 und dem Bremsträger 6 von der Bremsscheibe 8 weggeführt.

Die beiden letzten Ausführungsbeispiele zeigen, daß sich eine Warneinrichtung 12 auch bei Bremsbelägen ohne eine Aussparung 48 mit Vorteil einsetzen läßt.

## Patentansprüche

1. Elektrische Warneinrichtung (12) zur Anzeige von übermäßigem Reibbelagverschleiß, mit
- einem Stopfen (28), der einen Kopf (34) und einen Schaft (32) mit einer Längsnut (38) aufweist, in der ein durch den Kopf (34) geführter elektrischer Leiter (30) aufgenommen ist, und
- einem Schutzschild (36), das von dem Kopf (34) des Stopfens (28) nach oben ragt, gegen die Längsnut (38) seitlich versetzt ist und einen Fortsatz (46) aufweist, der in einem Abstand oberhalb des Kopfes (34) in Richtung zur gemeinsamen Mittelebene (40) des Schaftes (32) und der Längsnut (38) vorspringt,
**dadurch gekennzeichnet, daß**
- der Fortsatz (46) sich vom Schutzschild (36) über die gemeinsame Mittelebene (40) des Schaftes (32) und der Längsnut (38) bis mindestens etwa zum gegenüberliegenden Rand des Schaftes (32) erstreckt.

2. Warneinrichtung nach Anspruch 1,
**dadurch gekennzeichnet, daß** der Fortsatz (46) sich über den Kopf (34) des Stopfenschaftes (32) hinaus erstreckt.

3. Warneinrichtung nach Anspruch 1 oder 2,
**dadurch gekennzeichnet, daß** der Fortsatz (46) federnd nachgiebig ist und eine in Richtung des Stopfenschaftes (32) auf den elektrischen Leiter (30) wirkende Kraft ausüben kann.

4. Warneinrichtung nach einem der Ansprüche 1 bis 3,
**dadurch gekennzeichnet, daß** am freien Ende des Leiters (30) ein Anschlußstecker (58) befestigt ist.

5. Bremsbelag-Baugruppe (10), mit
- einer Trägerplatte (14), auf der ein Reibbelag (16) befestigt ist, wobei die Trägerplatte (14) einen radial gelegenen, reibbelagfreien Bereich (18) aufweist, und
- einer nahe der Trägerplatte (14) angeordneten Bohrung (24) in dem Reibbelag (16),
**dadurch gekennzeichnet, daß**
- die Trägerplatte (14) in dem reibbelagfreien Bereich (18) eine zum radialen Rand der Trägerplatte (14) offene Aussparung (48) aufweist,
- in der Bohrung (24) ein Warneinrichtung (12) gemäß einem der vorhergehenden Ansprüche befestigt ist, deren elektrischer Leiter (30) durch die Aussparung (48) geführt ist, und daß
- die Aussparung (48) und die Bohrung (24) Mittelebenen aufweisen, die zumindest benachbart sind.

6. Bremsbelag-Baugruppe nach Anspruch 5,
**dadurch gekennzeichnet, daß** der Fortsatz (46) der Warneinrichtung (12) sich bis in die Aussparung (48) der Trägerplatte (14) erstreckt.

7. Scheibenbremse,
**gekennzeichnet durch** eine Bremsbelag-Baugruppe (10) gemäß einem der Ansprüche 5 oder 6.

8. Scheibenbremse nach Anspruch 7,
**dadurch gekennzeichnet, daß** ein Federarm (50) einer auf die Bremsbelag-Baugruppe (10) wirkenden Niederhaltefeder (52) den radial offenen Rand der Aussparung (48) der Trägerplatte (14) verschließt.

9. Stopfen (28) für eine elektrische Warneinrichtung (12) gemäß einem der Ansprüche 1 bis 4, mit
- einem Stopfen (28), der einen Kopf (34) und einen Schaft (32) mit einer Längsnut (38) aufweist, der zur Aufnahme eines durch den Kopf (34) zu führenden elektrischen Leiters (30) aufgenommen ist, und
- einem Schutzschild (36), das von dem Kopf (34) des Stopfens (28) nach oben ragt, gegen die Längsnut (38) seitlich versetzt ist und einen Fortsatz (46) aufweist, der in einem Abstand oberhalb des Kopfes (34) in Richtung zur gemeinsamen Mittelebene (40) des Schaftes (32) und der Längsnut (38) vorspringt,
**dadurch gekennzeichnet, daß**
- der Fortsatz (46) sich vom Schutzschild (36) über die gemeinsame Mittelebene (40) des Schaftes (32) und der Längsnut (38) bis mindestens etwa zum gegenüberliegenden Rand des Schaftes (32) erstreckt.

## Claims

1. Electric warning device (12) for indicating excessive friction lining wear, having
- a plug (28), which comprises a head (34) and a shank (32) with a longitudinal groove (38), in which an electric conductor (30) passed through the head (34) is accommodated, and
- a protective shield (36), which projects up from the head (34) of the plug (28), is laterally offset relative to the longitudinal groove (38) and has an extension (46), which at a distance above the head (34) protrudes in the direction of the common centre plane (40) of the shank (32) and of the longitudinal groove (38),
**characterized in that**
- the extension (46) extends from the protective shield (36) over the common centre plane (40) of the shank (32) and of the longitudinal groove (38) up to at least approximately the opposite edge of the shank (32).

2. Warning device according to claim 1,
**characterized in that** the extension (46) extends beyond the head (34) of the plug shank (32).

3. Warning device according to claim 1 or 2,
**characterized in that** the extension (46) is resiliently compliant and may exert a force acting in the direction of the plug shank (32) upon the electric conductor (30).

4. Warning device according to one of claims 1 to 3,
**characterized in that** a connector (58) is fastened to the free end of the conductor (30).

5. Brake lining module (10), having
- a back plate (14), to which a friction lining (16) is fastened, wherein the back plate (14) has a radially situated, friction-lining-free region (18), and
- a bore (24) disposed close to the back plate (14) in the friction lining (16),
**characterized in that**
- the back plate (14) in the friction-lining-free region (18) has a recess (48), which is open towards the radial edge of the back plate (14),
- fastened in the bore (24) is a warning device (12) according to one of the preceding claims, the electric conductor (30) of which is led through the recess (48), and **in that**
- the recess (48) and the bore (24) have centre planes which are at least adjacent.

6. Brake lining module according to claim 5,
**characterized in that** the extension (46) of the warning device (12) extends as far as into the recess (48) of the back plate (14).

7. Disk brake,
**characterized by** a brake lining module (10) according to one of claims 5 or 6.

8. Disk brake according to claim 7,
**characterized in that** a spring arm (50) of a hold-down spring (52) acting upon the brake lining module (10) closes the radially open edge of the recess (48) of the back plate (14).

9. Plug (28) for an electric warning device (12) according to one of claims 1 to 4, having
- a plug (28), which comprises a head (34) and a shank (32) with a longitudinal groove (38), which is accommodated for receiving an electric conductor (30) to be passed through the head (34), and
- a protective shield (36), which projects up from the head (34) of the plug (28), is laterally offset relative to the longitudinal groove (38) and has an extension (46), which at a distance above the head (34) protrudes in the direction of the common centre plane (40) of the shank (32) and of the longitudinal groove (38),
**characterized in that**
- the extension (46) extends from the protective shield (36) over the common centre plane (40) of the shank (32) and of the longitudinal groove (38) up to at least approximately the opposite edge of the shank (32).

## Revendications

1. Dispositif électrique d'avertissement (12) pour l'affichage de l'usure exagérée d'une garniture de frottement, comportant
- un bouchon (28), qui présente une tête (34) et un fût (32) comportant une rainure longitudinale (38), qui reçoit un conducteur électrique (30) traversant la tête (34), et
- un bouclier de protection (36), qui dépasse de la tête (34) du bouchon (28) vers le haut, qui est décalé latéralement par rapport à la rainure longitudinale (38) et qui présente un prolongement (46) avançant à une certaine distance au-dessus de la tête (34) en direction du plan médian commun (40) du fût (32) et de la rainure longitudinale (38),
**caractérisé en ce que**
le prolongement (46) s'étend depuis le bouclier de protection (36), sur le plan médian commun (40) du fût (32) et de la rainure longitudinale (38), jusqu'au moins sensiblement au bord du fût (32) situé en face.

2. Dispositif d'avertissement suivant la revendication 1, **caractérisé en ce que** le prolongement (46) s'étend vers l'extérieur, au-dessus de la tête (34) du fût (32) du bouchon.

3. Dispositif d'avértissement suivant la revendication 1 ou 2, **caractérisé en ce que** le prolongement (46) est flexible, en formant ressort, et peut exercer une force agissant en direction du fût (32) du bouchon, sur le conducteur électrique (30).

4. Dispositif d'avertissement suivant l'une des revendications 1 à 3, **caractérisé en ce qu'**une fiche de raccordement (58) est fixée à l'extrémité libre du conducteur (30).

5. Groupe de constituants de garniture de frein (10), comportant
- une plaque support (14), sur laquelle est fixé une garniture de frottement (16), la plaque support (14) présentant une zone (18) sans garniture de frottement, disposée radialement, et,
- dans la garniture de frottement (16), un alésage (24) disposé près de la plaque support (14),
**caractérisé en ce que**
- la plaque support (14) présente, dans la zone (18) sans garniture de frottement, un évidement (48) ouvert vers le bord radial de la plaque support (14),
- dans l'alésage (24), est fixé un dispositif d'avertissement (12) conforme à l'une des revendications précédentes, dont le conducteur électrique (30) traverse l'évidement (48), et **en ce que**
- l'évidement (48) et l'alésage (24) présentent des plans médians qui, au moins, sont voisins.

6. Groupe de constituants de garniture de frottement suivant la revendication 5,
**caractérisé en ce que**
- le prolongement (46) du dispositif d'avertissement (12) s'étend jusque dans l'évidement (48) de la plaque support (14).

7. Frein à disque, **caractérisé par** un groupe de constituants de garniture de frein (10) suivant l'une des revendications 5 ou 6.

8. Frein à disque suivant la revendication 7, **caractérisé en ce qu'**un bras de ressort (50) d'un ressort de maintien par application (52) agissant sur le groupe de constituants de la garniture de frein (10) ferme le bord, ouvert radialement, de l'évidement (48) de la plaque support (14).

9. Bouchon (28) pour un dispositif électrique d'avertissement (12) suivant l'une des revendications 1 à 4, comportant
- un bouchon (28), qui présente une tête (34) et un fût (32) comportant une rainure longitudinale (38), qui est conçue pour recevoir un conducteur électrique (30) traversant la tête (34), et
- un bouclier de protection (36), qui dépasse de la tête (34) du bouchon (28) vers le haut, qui est décalé latéralement par rapport à la rainure longitudinale (38) et qui présente un prolongement (46) avançant à une certaine distance au-dessus de la tête (34) en direction du plan médian commun (40) du fût (32) et de la rainure longitudinale (38),
**caractérisé en ce que** le prolongement (46) s'étend depuis le bouclier de protection (36), sur le plan médian commun (40) du fût (32) et de la rainure longitudinale (38), jusqu'au moins sensiblement le bord du fût (32) situé en face.
